(19) **Europäisches Patentamt / European Patent Office / Office européen des brevets**

(11) **EP 4 035 447 B1**

(12) **EUROPEAN PATENT SPECIFICATION**

(45) Date of publication and mention of the grant of the patent:
**05.08.2026 Bulletin 2026/32**

(21) Application number: **19790092.1**

(22) Date of filing: **03.09.2019**

(51) International Patent Classification (IPC):
**H04W 28/02** *(2009.01)* **H04W 40/22** *(2009.01)*

(52) Cooperative Patent Classification (CPC):
**H04W 40/22; H04W 28/021; H04W 28/0231; H04W 28/0236**

(86) International application number:
**PCT/PT2019/000006**

(87) International publication number:
**WO 2021/045633 (11.03.2021 Gazette 2021/10)**

(54) **METHOD AND SYSTEM FOR ENHANCED STEERING AND TRAFFIC LOAD BALANCING IN WIRELESS MESH NETWORKS**

**VERFAHREN UND SYSTEM FÜR VERBESSERTE LENKUNG UND VERKEHRSLASTBALANCE IN DRAHTLOSEN MESH-NETZEN**

**PROCÉDÉ ET SYSTÈME POUR UNE ORIENTATION AMÉLIORÉE ET UN ÉQUILIBRAGE DE CHARGE DE TRAFIC DANS DES RÉSEAUX MAILLÉS SANS FIL**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.08.2022 Bulletin 2022/31**

(73) Proprietor: **Altice Labs, S.A.**
**3810-106 Aveiro (PT)**

(72) Inventors:
- **HENRIQUES DE JESUS, Paulo José**
  **3810-106 Aveiro (PT)**
- **VALENTE DA SILVA, Nelson José**
  **3810-106 Aveiro (PT)**
- **CARVALHO FERREIRA RIBEIRO, João Luís**
  **3515-107 Viseu (PT)**

- **FERREIRA E PEREIRA, João Pedro**
  **3830-646 Gafanha da Nazaré (PT)**
- **ABREU LUÍS, Nuno Miguel**
  **1170-104 Lisboa (PT)**
- **BARRETO DE MIRANDA SARGENTO, Susana Isabel**
  **3830-134 Ílhavo (PT)**

(74) Representative: **Arnaut, José Luis**
**Rui Pena Arnaut & Associados**
**Rua Sousa Martins, 10**
**1050-218 Lisboa (PT)**

(56) References cited:
**US-A1- 2016 088 521    US-A1- 2018 241 450**
**US-A1- 2018 279 192    US-A1- 2018 352 493**
**US-A1- 2019 075 469**

## Description

## FIELD OF THE INVENTION

The present invention is enclosed in the area of mesh networks. Particularly, the present invention relates to a method and system for managing the operation of wireless mesh networks. More particularly, the present invention describes a method and system for enhanced steering and traffic load balancing in wireless mesh networks.

## PRIOR ART

Home wireless networks, a particular scenario of Wireless Local Area Networks (WLANs), target indoor environments with several radio propagation obstacles, such as walls and furniture to name a few. These obstacles reduce the signal quality emitted by an access point (AP), therefore reducing the coverage of such equipment. Due to the regulatory bodies, as well as the different transmission characteristics of both APs and stations (STA)/client devices, increasing the transmission power is not a valid solution to improve the wireless coverage. A more effective way to solve this problem is to bring additional APs to the network, forming a wireless mesh network. In a home wireless network, the main AP is denoted as Root AP, responsible to communicate with the outside world (e.g. Internet), and the remaining APs are denoted as Extenders and, if used, they establish the connection between the Root AP and the STA devices. Extenders can be connected to the Root AP and/or between themselves through wireless links or through cable, depending on the configuration of the scenario, thus creating backhaul links.

From the several challenges associated with the operation of wireless mesh networks, one of the most critical is the steering of the STA device, i.e., how to manage the connections of the several STAs among the available APs (Root AP and Extenders). However, choosing between the Root AP and one of the Extenders is not the only choice available. With the latest generation of Wi-Fi APs, two wireless bands can be used, 2.4 and 5 GHz, each one with distinguished characteristics: the first one typically enables higher coverage while the second one offers higher throughput. In a conventional Wi-Fi mesh network, a STA device remains associated with an AP if the link quality, given by the Received Signal Strength Indicator (RSSI), is better than any other link with any other AP in the network. However, the AP with the best link quality may not provide the best Quality of Service, and consequently, Quality of Experience. For example, the number of STAs connected to a specific AP can be too high that, although the link quality is considered of high quality, the resulting airtime for each STA device is considerably small.

Traditional steering methods are independently-based, i.e., the STA device usually selects the AP that provides the highest signal strength in comparison to the signal strength provided by other APs without considering the effects of an eventual steering in the performance of the new AP, and consequently, on the network. More recently, several works have proposed alternative STA steering mechanisms whose decision takes place in the AP. For that, the STA sends its neighbouring information to the AP in response to a beaconing message sent by the AP to the STA. Such approach is not transparent to the STA device in the sense that he is the one to provide the required information to the AP of interest. Finally, other approaches admit that all the APs in the network are allowed to exchange STA's information using the backhaul links. Following this approach, the steering decision may occur in any of the AP, Extender or Root AP.

Patent document US 2018/0352493 A1 discloses a controller for steering a client device between content streaming apparatuses in a wireless local area network (WLAN). The controller is configured to determine whether a client device should be steered to a content streaming apparatus based on at least one sample measurement related to the client device and/or the content streaming apparatus. The steering logic calculations may use predetermined thresholds.

Further patent document US 2016/08855521 A1 similarly shows a method for optimizing communications traffic in a wireless network. Traffic on paths in the wireless network may be load balanced to improve channel utilization and/or relieve an overloaded communication channel. To load balance the traffic, a first AP may determine candidate paths between a first AP and a client device, wherein at least one of the candidate paths traverses a second AP. The AP may determine available bandwidths of the candidate paths based, at least in part, on availability of communication channels of the candidate paths. The AP may steer a portion of the wireless network traffic of the client device to a first of the candidate paths based, at least in part, on the available bandwidths.

## PROBLEM TO BE SOLVED

All the aforementioned solutions, although providing different levels of steering decisions, they lack on finding a steering criterion that takes into consideration not only the link quality, but also the network topology, the bandwidth, the capabilities of each element, AP and STA device, and other important parameters, and proactively steer the STAs in an integrated way from the network's point of view.

The present solution intends to innovatively overcome such issues, providing an efficient method and system for steering clients of a Wi-Fi mesh network to the best AP and wireless band.

## SUMMARY OF THE INVENTION

It is therefore an object of the present invention to produce a method and system for optimizing the link quality of clients connected to a wireless mesh network, either through band steering (2.4GHz or 5GHz) or AP steering (Root AP or Extenders).

In order to achieve that, the present solution makes use of two logical entities, a centralized controller that acts as a master and has the vision of the entire network, and distributed agent entities that act as slaves and exchange information with the controller, to build a mesh architecture. In this configuration, the Root AP typically contains the controller and may also contain an agent entity, while the Extenders are always comprised by agent entities.

The invention is set-out in the appended claims.

## DESCRIPTION OF FIGURES

Figure 1 is a schematic of multiple clients in a Wi-Fi mesh network.
Figure 2 is a flow chart of the overall behaviour of the present invention;
Figure 3 is a flow chart of the link optimization routine;
Figure 4 is a flow chart of the identification of saturated STAs;
Figure 5 is a flow chart of the load balancing routine.
Figure 6 depicts the process of a steer request received by the Steer Manager.
Figure 7 illustrates the process responsible for detecting weak STAs.

## DETAILED DESCRIPTION

The present invention provides a method and system for managing the connections of multiple STAs in a Wi-Fi mesh network, using STA steering to optimize the overall throughput of the network. The STAs are proactively steered depending on the link quality, the network topology and wireless medium occupation, as well as the different equipment capabilities, to ultimately provide the best available throughput. This invention also aims to detect crowded APs or frequency bands, and steer STAs accordingly towards an efficient load control and traffic management between APs and improved quality of experience.

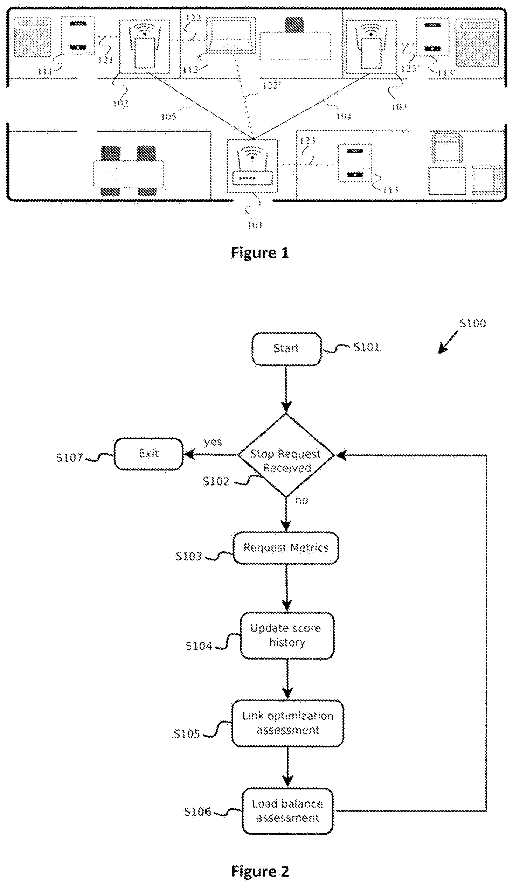

Figure 1 provides a high-level view of a possible residential wireless mesh network use case where this innovation can be applied. Here, the Root AP (101) is typically placed indoors and provides the wireless link that allows both STA devices and Extenders to connect to the network. The solid lines (104 and 105) denote the wireless backhaul connection that is stablished between the Root AP and the Extenders (102 and 103). The dotted lines (121, 122 and 123) denote the wireless fronthaul connection that is stablished between the STA devices (111, 112 and 113) and the APs (Root AP or Extenders). A STA mobility scenario is also illustrated, where STA (113) is initially connected to the Root AP (101) and after moving into another physical location (such as the bed room), the same STA (113') in now connected to the Extender (103). Finally, a link optimization scenario is also depicted, where a STA device (112) initially connects to the wireless network via an Extender (102) and then is steered to connect directly to the Root AP (122').

Base Algorithm Routine

Figure 2 describes the process S100, which consists on the base algorithm that handles the steer management of STAs in the network. The base algorithm routine is executed in the Root AP and consists of a loop running continuously until instructed otherwise. The first stage is responsible for ordering Extenders AP to report STAs' message status therein connected, to the Root AP (S103). The report is executed by the agent entities of the Extenders AP and includes metrics related to the connected STAs or the status of the wireless medium in which the Root AP is located. The Root AP waits for a predefined period of time until the requested metrics are received. In order to avoid spontaneous peaks and mitigate metric variations, a score history is kept. Using the metrics received, the Root AP will compute values to be used in Link Optimization and Load Balance routines, to be executed in said Root AP, and is updated in every iteration (S104).

The Root AP will then use the values computed in S104 to decide which action can and should be taken regarding Link Optimization (S105) and Load Balance (S106) processes.

Link Optimization Assessment

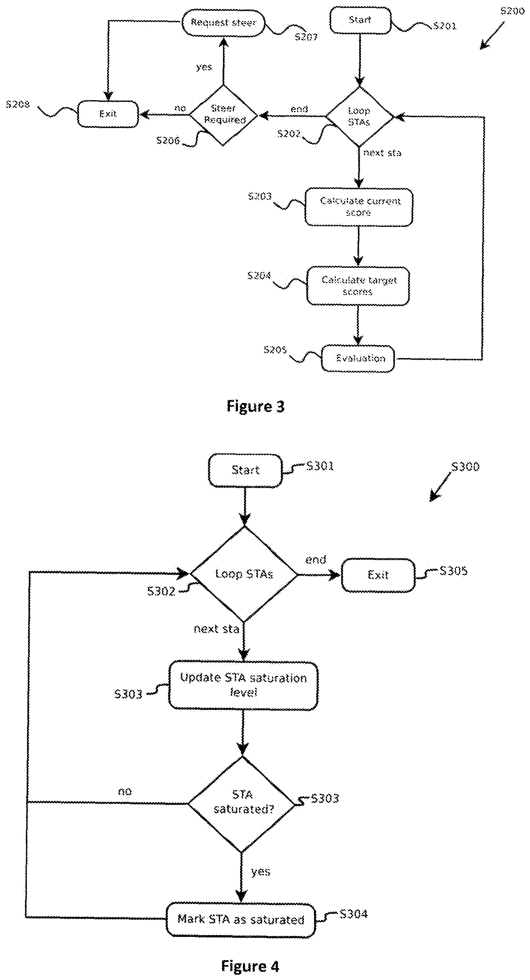

Figure 3 describes the link optimization process to be executed in the Root AP, by the Link Optimization routine. In the context of this process (S200), the quality of a link (named as score) is classified by the maximum possible throughput that a given STA would have via a given AP and band. In step S202, the process S200 enters in a loop, where all the connected STA links - connecting a STA to an AP - are evaluated. Then, the score for the current link, connecting a STA to its AP, is computed (S203). After that, a score is computed for every pair of {STA, fronthaul Basic Service Set (BSS)} (S204). Links to 5GHz BSS and via the Root AP are preferred, as they result in higher throughput gains. Links to 2.4GHz are used for higher distances to APs or for older devices, while links to Extenders are available for STA devices far away from the Root AP. At step S205, two different evaluations are performed:

I. The first is to check if the highest score of a STA to a target AP is higher than the score of the STA to the current AP, i.e, if the STA would get a higher maximum throughput than in the current link.

II. The second is to evaluate if the throughput gain is better than in previous cases where the first condition was true.

In step S206, the link optimization routine S200 checks if there is any steer required, following the evaluation in step S205. If required, a steer is requested for the pair {STA, target BSS} with the highest score. The link optimization assessment ends in step S208.

To estimate the maximum throughput that a STA will achieve when connected to a different AP, the following inputs are used:

i. Signal Strength;

ii. Maximum backhaul physical data rate;

iii. Estimation of maximum theoretical physical data rate according to the STA and AP's capabilities.

The estimation of maximum theoretical physical data rate uses the following formula:

$$
E_{phy}(s, b_t) = \begin{cases} \frac{M_{phy}(s, b_t)}{2^{H(b_t)}}, & \text{if } I_{FH}(b_t) = I_{BH}(b_t) \\ M_{phy}(s, b_t), & \text{if } I_{FH}(b_t) \neq I_{BH}(b_t) \end{cases}
$$

where $E_{phy}$ represents the estimation, s represents the STA, $b_t$ represents the target BSS, $M_{phy}(s, b_t)$ represents the maximum theoretical physical data rate that can be obtained on the link between the STA s and the target BSS $b_t$, according to each other's capabilities. $H(b_t)$ represents the distance of the AP that advertises the BSS in relation to the Root AP, in hops. $I_{FH}(b_t)$ refers to the interface that is used to advertise the target BSS (fronthaul), $I_{BH}(b_t)$ represents the interface used for backhaul communications. This model is valid for equipment with a shared radio interface for fronthaul and backhaul communications. These inputs are combined and define a curve through a fitting function, which results in a formula that is capable of estimating the maximum throughput that a STA will be able to achieve when connected to a set AP, in the described conditions.

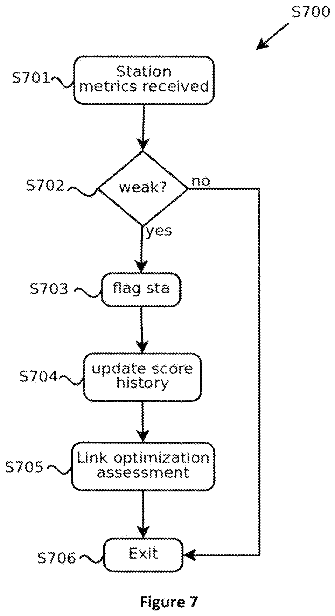

The Link Optimization routine is also programmed to detect weak STAs (S700) by means of the process described in Figure 7. When a message status is received (S701), containing STA's metrics response, the network metrics are then used to check if the STA's link is weak (S702). This verification is based solely on RSSI (Received Signal Strength Indicator). If the STA's link is determined as weak, it is flagged and will be handled by a separate monitor entity. On the other hand, if a weak STA is no longer weak, its weak flag is removed (S702).

Weak STAs rely on the Link Optimization routine to maintain connectivity. In order for the Link Optimization process to provide a faster response to the weak STAs' fading link, the Link Optimization routine score computing (S704) and assessment (S705) is performed when the STAs' metrics are received.

To provide a quicker response, weak STAs' metric requests are not handled by the base algorithm routine (S103) as regular STAs are; instead a separate entity, named Monitor Entity, is responsible for requesting metrics for these associated STAs, in a higher frequency in relation to the base algorithm routine.

Weak STAs are only subject to the Link Optimization routine and the Load balance routine will not act or consider them.

Load Balance Assessment

The load balance routine is comprised of two different subprocesses:

I. Saturated STA detection:
A STA is considered saturated if it is unable to achieve more throughput because the medium is overloaded;
II. Throughput prediction:

If a saturated STA is identified, a prediction score (i.e. throughput) is computed for each potential target AP.

Saturated STA detection

This subprocess is depicted on Figure 4. In step S302, the process S300 enters a loop, where all connected STAs' links are evaluated to check for saturated links. This process updates the saturation level of a STA (S303). The saturation level is related to the amount of times a STA is classified as saturated within a pre-defined time frame. Then, the saturation level is evaluated to check whether or not the STA is saturated (S303). In the case of a positive answer, the STA is marked as saturated (S304). Using this approach, to ultimately classify a STA as saturated, a client needs to be detected as being saturated multiple times within a specific time frame, which reduces the influence of data transmission spikes.

The detection itself takes into account a wide range of inputs, which not only includes metrics from the STA under evaluation, but also from other STAs in the network.

From the STA under evaluation:

I. Airtime
II. Transmission opportunity
III. Retransmission rate
IV. Physical data rate
V. Data rate
VI. Transmission failures
VII. Number of hops to Root AP
VIII. Band (2.4GHz or 5GHz)

From other STAs connected to the same AP:

- Airtime

- Data rate

Using all this information, some of these metrics are combined to derive the following:

- Available airtime
- Percentage of maximum airtime
- Percentage of total data rate

The decision is accomplished using a classification tree with two classes: saturated or not saturated STAs. This is modelled in a conservative manner, as it is tuned to reduce false positives in detriment of true positives. The outcome of this approach is a slower identification of overloaded STAs, but also a more trustworthy overall classification.

Throughput prediction

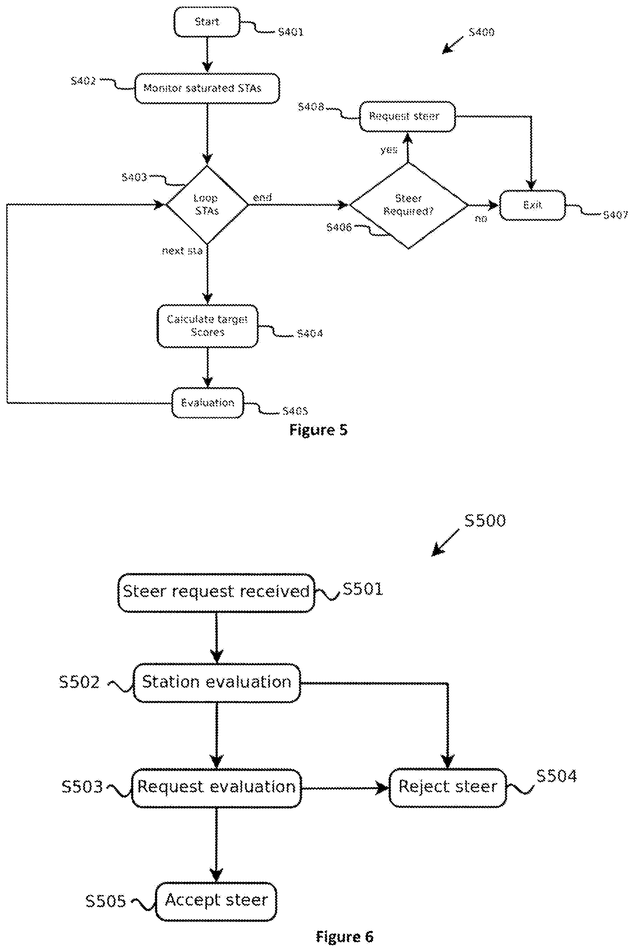

Figure 5 describes the throughput prediction process. The process S400 is executed after process S300, and only starts if there are STAs marked as saturated. The STAs marked as saturated by process S300 are monitored for a specified amount of time (with a maximum of 50 seconds) (S402). During this step, all the relevant metrics corresponding to the STAs under evaluation are stored. After this, the process enters a loop involving all the STAs marked as saturated (S403). Here, a target score is calculated for all available APs (S404), followed by a subsequent evaluation (S405). In this step, two different evaluations are performed:

I. The first is to check if the highest score of a STA to a target AP is higher than the score of the STA to the current STA's throughput, measured during the monitoring phase (S402).
II. The second is to evaluate if the throughput gain is better than in previous cases where the first condition was true.

In step S406, the process S400 checks if there is any steer required, following the evaluation in step S405. If required, a steer is requested for the pair of STA and target AP where the throughput gain is the highest. The link optimization routine then ends its execution in step S407.

This process combines the estimation of the maximum throughput from the link optimization process S200 with metrics that characterize the medium occupation.

As such, the considered inputs are as follows:

I. Link optimization score (estimated maximum throughput);
II. Transmission opportunity;
III. Available airtime;
III. Retransmission rate;

In order to manage the steering of STA devices and also the hierarchy between Link Optimization and Load Balance routines' actions and steer requests, the Root AP comprises a Steer Manager entity. Such entity acts base on the current priorities:

1. Weak STA optimization
2. Load balance
3. Regular STA optimization

This entity is also responsible for allowing or denying the Link Optimization and Load Balance modules' actions on a particular STA, based on the STA's previous behaviour.

To perform these tasks, the Steer Manager entity maintains a queue of steer requests. For each request, a state is assigned accordingly. The following table describes these states:

| Steer state | Description |
|---|---|
| pending | request on queue to be sent |
| processing | request has been sent, waiting for reply |
| success | STA has been steered |
| failed | STA has not responded or has rejected the steer request |

In Figure 6, S500 depicts the process of a steer request received by the Steer Manager. This request can be originated in the Link Optimization routine or in the Load Balance routine.

After the request is received, the Steer Manager checks if there is no current time penalty on the STA (S502). If a time penalty is in effect, the request will be rejected (S504). Otherwise, the Steer Manager will check if there are no conflicting requests (S503).

A new request will be rejected if an old similar request (same STA, same source BSS, same target BSS) with equal or higher priority in a pending or processing state exists. If the old request, as described previously, with a lower priority exists, the new request will be rejected if the old request is in the processing state (S504). If the old request is in the pending state, the old request will be deleted and the new request will be accepted (S505).

If a STA did not respond as expected to a steer request, this STA will be marked as misbehaved, for a predefined period of time. The steering type can be classified as:

- BSS transition steer (IEEE 802.11v).
- Legacy Steer by deauthentication of client from current BSS, and blacklisted by MAC address in every BSS that is not source or destination BSS.

Following a steer request, the behaviour or the STA device is not completely deterministic and in some cases, it can have an unexpected behaviour. To prevent unnecessary disconnects, every steer response is classified as one of the following:

- Accept: The STA is steered and reports a successful steer;
- Reject: The STA is not steered and reports a rejected steer;
- Wrong BSS joined: The STA joins a BSS different from the target BSS;
- Disconnect: The STA does not reconnect after a legacy blacklist;
- Jump back: The STA is steered to the target BSS but soon returns to the source BSS;
- Timeout: No response obtained for the steer request (the Extender has not carried out the order or IEEE 802.11v reject).

Using the steer response classification above, penalties are given accordingly:

| Conditions | Penalty |
|---|---|
| Steer timeout | low |
| Accept | low |
| Reject | mid |
| Random BSS | mid |
| Disconnect | high |

As will be clear to one skilled in the art, the present invention should not be limited to the embodiments described herein, and a number of changes are possible which remain within the scope of the present invention.

## Claims

1. Method for enhanced steering and traffic load balancing in wireless mesh networks, comprising:

   i. A Root AP periodically instructs an Extender AP to report STAs' message status, wherein said message status includes metrics related to the connected STAs or the status of the wireless medium in which the Root AP is located;
   ii. The Root AP waits for a predefined period of time until the requested messages status are received;
   iii. The Root AP keeps a score history of all the STAs' message status received from the Extenders AP and updates it as the message status are being received;
   i.v The Root AP uses the updated score history of the STAs connected to the Extender AP as an input to a Link Optimization routine and to a Load Balance routine, to decide which action is to be taken, wherein the link optimization routine comprises:

   a. Calculating the current score of a link; the score being classified by the maximum throughput that a given STA would have via a given access point and band
   b. Calculating target scores for every pair of {STA, fronthaul Basic Service Set};
   c. Evaluating if the highest score of a STA to a target AP is higher than the score of the STA to the current AP, and, if so, evaluating if the throughput gain is better than any recorded gain for said STA in thecurrent AP;
   d. Checking if there is any steer required and requesting said steer for the pair {STA, target Basic Service Set}

   v. excute the steps i. to iv. in a continuous loop until instructed otherwise from the Root AP, the method **characterized in that** the maximum throughput is estimated considering the signal strength, maximum backhaul physical data rate and the estimation of maximum theoretical physical data rate according to a STA and AP's capabilities according to

$$E_{phy}(s, b_t) = \begin{cases} \frac{M_{phy}(s, b_t)}{2^{H(b_t)}}, & \text{if } I_{FH}(b_t) = I_{BH}(b_t) \\ M_{phy}(s, b_t), & \text{if } I_{FH}(b_t) \neq I_{BH}(b_t) \end{cases}$$

   where $E_{phy}$ represents the Estimation, s represents the STA, $b_t$ represents the target BSS, $M_{phy}(s, b_t)$ represents the maximum theoretical physical data rate that can be obtained on the link between the STA $s$ and the target BSS $b_t$, according to each other's capabilities; $H(b_t)$ represents the distance of the AP that advertises the BSS in relation to the Root AP, in hops; $I_{FH}(b_t)$ refers to the interface that is used to advertise the target BSS (fronthaul), $I_{BH}(b_t)$ represents the interface used for backhaul communications.

2. Method according to claim 1, wherein the Link Optimization routine is further programmed to detect weak STAs based on the STA's metrics contained in the message status; said detection being based on the RSSI of the STA's link.

3. Method according to claim 2, wherein weak STA's links are flagged and are handled by a Monitor Entity of the Link Optimization routine, by :

- requesting the associated STA metrics for weak STAs in a higher frequency in relation to the requests of the base algorithm routine;
- based on those requests, updating the score history;
- performing a link optimization assessment to evaluate if the weak STA is no longer weak and if so removing the weak flag.

4. Method according to any of the previous claims 2 or 3, wherein weak STAs are not considered by the Load Balance routine.

5. Method according to any of the previous claims, wherein the Load Balance routine executed by a load balance process comprises:

    i. Detecting saturated STA by assessing if the STA is unable to achieve more throughput because the medium is overloaded;
    ii. Predicting throughput in saturated STAs and computing a prediction score for each potential target AP;

wherein the i. is executed for all connected STAs' links by :

    a. Determining the amount of times a STA is classified as saturated within a time frame;
    b. Evaluating the saturation level to check whether or not a STA is saturated;
    c. Label STAs as saturated;

and
wherein, the evaluation of the saturation level takes into account inputs including metrics from the STA under evaluation, such as

    - Airtime, transmission opportunity, retransmission rate, physical data rate, data rate, transmission failures, number of hops to Root AP and band;

and metrics from other STAs in the network, such as

    - Airtime and data rate;

to determine:

    - The available airtime;
    - The percentage of maximum airtime; and
    - The percentage of total data rate,

and label said STAs as saturated or not saturated.

6. Method according to the previous claim 5, wherein the throughput prediction stage is computed by:

    i. Monitoring saturated STAs for a specified amount of time and storing all the relevant metrics corresponding to the STAs under evaluation;
    ii. Calculating the target score for all available APs, followed by a subsequent 2-step evaluation:

        a. Checking if the highest score of a saturated STA to a target AP is higher than the score of the STA to the measured STA score;
        b. Evaluating if the throughput gain is higher than any recorded gain for said STA to current AP; ;

    iii. Requesting steering for the pair {STA, target AP} where the throughput gain is the highest.

7. Method according to claims 1 and 6, wherein the estimation of the highest score of a saturated STA combines the estimation of the maximum throughput, of the link optimization routine, with metrics that characterize the medium occupation such as transmission opportunity, available airtime and retransmission rate.

8. Method according to any of the previous claims wherein steering STAs and managing the hierarchy between Link Optimization and Load Balance routines' actions and steer requests at the Root AP which comprises a Steer Manager entity follows the priorities:

    i. Weak STA optimization;
    ii. Load balance;
    iii. Regular STA optimization;

to allow or deny the Link Optimization and Load Balance routines' actions on a particular STA based on the respective STA's previous behaviour.

9. Method according to previous claim 8, wherein the maintaining a queue of steer requests by labelling request with a steering state from the following:

    - Pending: request on queue to be sent;
    - Processing: request has been sent, waiting for reply;
    - Success: STA has been steered;
    - Failed: STA has not responded or has rejected the steer request.

10. Method according to any of the previous claims 8 or 9, wherein managing steering requests, such requests being generated in the Link Optimization or in the Load Balance routines, comprises the following steps:

    i. Checking if there is not current time penalty on the STA, and if so, the request is rejected;
    ii. If there is no time penalty on the STA, it is checked if there are no conflicting requests;
    iii. If there is a conflicting request, meaning that there is a similar request with the same STA, same source Basic service set and same target Basic service set, the new request is rejected if the old request with equal or higher priority in a pending or processing state exist; if said old request has a lower priority, the new request is rejected if the old request is in the processing state; if the old request is in pending state, the old request is deleted and the new request is accepted.

11. Method according to any of the previous claims 8 to 10, wherein in case the STA does not respond to the steer request as expected, marking said STA as 'misbehaved' for a predefined period of time, according to a following steer type:

    - Basic service set steer;
    - Legacy steer, which is a steer by deauthentication of STA from current Basic service set, and blacklisted by MAC address in every Basic service set that is not source or destination Basic service set;

wherein, the steer response to a steer request is classified as one of the following:

    - Accept, if the STA is steered and reports a successful steer;
    - Reject, if the STA is not steered and reports a rejected steer;
    - Wrong Basic Service Set joined, if the STA joins a Basic Service Set different from the target Basic Service Set;
    - Disconnect, if the STA does not reconnect after a legacy blacklist;
    - Jump back, if the STA is steered to the target Basic Service Set but soon returns to the source Basic Service Set;
    - Timeout, if no response is obtained for the steer request.

12. System for enhanced steering and traffic load balancing in wireless mesh networks comprising:

    - A Root AP
    - At least one Extender AP;

wherein,

    - The Root AP comprises a controller comprising processing means configured to execute the method of claims 1 to 11 and to act as a master;

The Extender AP comprises at least one agent entity configured to act a slave and to exchange information with the controller.

**Patentansprüche**

1. Verfahren zur verbesserten Steuerung und Verkehrslastverteilung in drahtlosen Mesh-Netzwerken, umfassend:

   i. Ein Root-AP weist einen Extender-AP periodisch an, den Nachrichtenstatus von STAs zu melden, wobei der Nachrichtenstatus Metriken umfasst, die sich auf die verbundenen STAs oder den Status des drahtlosen Mediums beziehen, in dem sich der Root-AP befindet;
   ii. Der Root-AP wartet eine vordefinierte Zeitspanne ab, bis der Status der angeforderten Nachrichten empfangen wurde.
   iii. Der Root-AP führt einen Wertverlauf aller vom Extender-AP empfangenen Nachrichtenstatus der STAs und aktualisiert diesen, sobald die Nachrichtenstatus eingehen;
   iv. Der Root-AP verwendet den aktualisierten Wertverlauf der mit dem Extender-AP verbundenen STAs als Eingabe für eine Verbindungsoptimierungsroutine und eine Lastverteilungsroutine, um zu entscheiden, welche Maßnahme ergriffen werden soll, wobei die Verbindungsoptimierungsroutine Folgendes umfasst:

   a. Berechnung den aktuellen Wert einer Verbindung; wobei der Wert anhand des maximalen Durchsatzes klassifiziert wird, den eine bestimmte STA über einen bestimmten Zugangspunkt und ein bestimmtes Band erzielen würde
   b. Berechnung des Zielwerts für jedes Paar {STA, Fronthaul-Basisdienstsatz};
   c. Bewertung, ob der höchste Wert einer STA zu einem Ziel-AP höher ist als der Wert der STA zum aktuellen AP, und, falls ja, Bewertung, ob der Durchsatzgewinn besser ist als jeder aufgezeichnete Gewinn für die genannte STA im aktuellen AP;
   d. Prüfen, ob eine Steuerung erforderlich ist, und diese Steuerung für das Paar {STA, Ziel-Basisdienstsatz} anfordern

   V. Ausführen der Schritte i. bis iv. in einer Endlosschleife, bis vom Root-AP eine andere Anweisung erfolgt, wobei das Verfahren **dadurch gekennzeichnet ist, dass** der maximale Durchsatz unter Berücksichtigung der Signalstärke, der maximalen physikalischen Backhaul-Datenrate und der Schätzung der maximalen theoretischen physikalischen Datenrate geschätzt wird entsprechend den Fähigkeiten einer STA und eines AP gemäß

   $$E_{phy}(s, b_t) = \begin{cases} \frac{M_{phy}(s, b_t)}{2^{H(b_t)}}, & \text{if } I_{FH}(b_t) = I_{BH}(b_t) \\ M_{phy}(s, b_t), & \text{if } I_{FH}(b_t) \neq I_{BH}(b_t) \end{cases}$$

   wobei $E_{phy}$ die Schätzung darstellt, $s$ die STA darstellt, $b_t$ das Ziel-BSS darstellt, $M_{phy}(s, b_t)$ die maximale theoretische physikalische Datenrate darstellt, die auf der Verbindung zwischen der STAs und dem Ziel-BSS $b_t$ entsprechend den jeweiligen Fähigkeiten erreicht werden kann; $H(b_t)$ die Entfernung des AP, der das BSS ankündigt, in Bezug auf den Root-AP, in Hops darstellt; $I_{FH}(b_t)$ sich auf die Schnittstelle bezieht, die zur Ankündigung des Ziel-BSS (Fronthaul) verwendet wird, $I_{BH}(b_t)$ die für die Backhaul-Kommunikation verwendete Schnittstelle darstellt.

2. Verfahren gemäß Anspruch 1, wobei die Verbindungsoptimierungsroutine ferner so programmiert ist, dass sie schwache STAs auf der Grundlage der im Nachrichtenstatus enthaltenen Metriken der STA erkennt; wobei diese Erkennung auf dem RSSI der Verbindung der STA basiert.

3. Verfahren gemäß Anspruch 2, wobei Verbindungen schwacher STAs markiert und von einer Überwachungseinheit der Verbindungsoptimierungsroutine behandelt werden, indem:

   - die zugehörigen STA-Metriken für schwache STAs mit einer höheren Frequenz im Vergleich zu den Anfragen der Basisalgorithmus-Routine abzufragen;
   - auf der Grundlage dieser Abfragen den Wertverlauf zu aktualisieren;
   - Durchführung einer Verbindungsoptimierungsbewertung, um zu evaluieren, ob die schwache STA nicht mehr schwach ist, und wenn ja, Entfernen des Schwach-Flags.

4. Verfahren gemäß einem der vorstehenden Ansprüche 2 oder 3, wobei schwache STAs von der Lastverteilungsroutine nicht berücksichtigt werden.

5. Verfahren gemäß einem der vorstehenden Ansprüche, wobei die von einem Lastverteilungsprozess ausgeführte Lastverteilungsroutine Folgendes umfasst:

> i. Erkennen eines gesättigten STA durch Beurteilen, ob der STA keinen höheren Durchsatz erzielen kann, weil das Medium überlastet ist;
> ii. Vorhersagen des Durchsatzes in gesättigten STAs und Berechnen eines Vorhersagewerts für jeden potenziellen Ziel-AP;
> wobei der Schritt i. für alle Verbindungen der verbundenen STAs ausgeführt wird durch:

>> a. Ermitteln der Häufigkeit, mit der ein STA innerhalb eines Zeitraums als gesättigt klassifiziert wird;
>> b. Bewertung des Sättigungsgrades, um zu prüfen, ob eine STA gesättigt ist oder nicht;
>> c. Kennzeichnen der STAs als gesättigt;

> und
> wobei die Bewertung des Sättigungsgrads Eingangsdaten berücksichtigt, einschließlich Metriken der zu bewertenden STA, wie beispielsweise

>> - Sendezeit, Übertragungsmöglichkeit, Wiederholungsrate, physikalische Datenrate, Datenrate, Übertragungsfehler, Anzahl der Hops zum Root-AP und Band;
>> sowie Metriken von anderen STAs im Netzwerk, wie z. B.

>>> - Sendezeit und Datenrate;

>> um Folgendes zu bestimmen:

>>> - Die verfügbare Sendezeit;
>>> - Den Prozentsatz der maximalen Sendezeit; und
>>> - Den Prozentsatz der Gesamtdatenrate,

> und Kennzeichnen der genannten STAs als gesättigt oder nicht gesättigt.

6. Verfahren gemäß dem vorstehenden Anspruch 5, wobei die Durchsatzvorhersagephase wie folgt berechnet wird:

> i. Überwachen gesättigter STAs über einen bestimmten Zeitraum und Speichern aller relevanten Metriken, die den zu bewertenden STAs entsprechen;
> ii. Berechnung des Zielwerts für alle verfügbaren APs, gefolgt von einer anschließenden zweistufigen Bewertung:

>> a. Prüfung, ob der höchste Wert einer gesättigten STA zu einem Ziel-AP höher ist als der Wert der STA zum gemessenen STA-Wert;
>> b. Bewertung, ob der Durchsatzgewinn höher ist als jeder aufgezeichnete Gewinn für die genannte STA zu dem aktuellen AP;

> iii. Anfordern einer Steuerung für das Paar {STA, Ziel-AP}, bei dem der Durchsatzgewinn am höchsten ist.

7. Verfahren gemäß den Ansprüchen 1 und 6, wobei die Schätzung des höchsten Wertes eines gesättigten STA die Schätzung des maximalen Durchsatzes der Verbindungsoptimierungsroutine mit Metriken kombiniert, die die Medienbelegung charakterisieren, wie beispielsweise Übertragungsmöglichkeit, verfügbare Sendezeit und Wiederholungsrate.

8. Verfahren gemäß einem der vorstehenden Ansprüche, wobei die Steuerung von STAs und die Verwaltung der Hierarchie zwischen den Aktionen der Routinen zur Verbindungsoptimierung und Lastverteilung sowie den Steuerungsanforderungen am Root-AP, der eine Steuerung-Manager-Einheit umfasst, den folgenden Prioritäten folgt:

> i. Schwache STA-Optimierung;
> ii. Lastverteilung;
> iii. Regelmäßige STA-Optimierung;

um die Aktionen der Routinen zur Verbindungsoptimierung und Lastverteilung für eine bestimmte STA basierend auf dem bisherigen Verhalten der jeweiligen STA zuzulassen oder zu verweigern.

9. Verfahren gemäß dem vorstehenden Anspruch 8, wobei das Führen einer Warteschlange von Steuerungsanforderungen dadurch erfolgt, dass die Anforderungen mit einem der folgenden Steuerungszustände gekennzeichnet werden:

- Ausstehend: Anforderung in der Warteschlange, die gesendet werden soll;
- In Bearbeitung: Anforderung wurde gesendet, wartet auf Antwort;
- Erfolgreich: STA wurde gesteuert;
- Fehlgeschlagen: STA hat nicht geantwortet oder die Steuerungsanforderung abgelehnt.

10. Verfahren gemäß einem der vorstehenden Ansprüche 8 oder 9, wobei das Verwalten von Steuerungsanforderungen, wobei solche Anforderungen in den Routinen zur Verbindungsoptimierung oder Lastverteilung erzeugt werden, die folgenden Schritte umfasst:

i. Prüfen, ob derzeit keine Zeitstrafe für die STA vorliegt; falls ja, wird die Anfrage abgelehnt;
ii. Liegt keine Zeitstrafe für die STA vor, wird geprüft, ob keine kollidierenden Anfragen vorliegen;
iii. Liegt eine kollidierende Anfrage vor, d. h. eine ähnliche Anfrage mit derselben STA, demselben Quell-Basisdienstsatz und demselben Ziel-Basisdienstsatz, wird die neue Anfrage abgelehnt, wenn die alte Anfrage mit gleicher oder höherer Priorität im Status "ausstehend" oder "in Bearbeitung" vorliegt; hat die alte Anfrage eine niedrigere Priorität, wird die neue Anfrage abgelehnt, wenn sich die alte Anfrage im Status "in Bearbeitung" befindet; befindet sich die alte Anfrage im Status "ausstehend", wird die alte Anfrage gelöscht und die neue Anfrage angenommen.

11. Verfahren gemäß einem der vorstehenden Ansprüche 8 bis 10, wobei für den Fall, dass die STA nicht wie erwartet auf die Steuerung-Anfrage reagiert, die STA für einen vordefinierten Zeitraum gemäß einem der folgenden Steuerung-Typen als "fehlverhalten" markiert wird:

- Steuerung des Basisdienstsatz;
- Legacy-Steuerung, bei der es sich um eine Steuerung durch Deauthentifizierung der STA aus dem aktuellen Basisdienstsatz handelt, wobei die MAC-Adresse in jedem Basisdienstsatz, der nicht der weder Quell- noch Ziel-Basisdienstsatz ist, auf eine Blacklist gesetzt wird;

wobei die Steuerung-Antwort auf eine Steuerung-Anfrage als eine der folgenden klassifiziert wird:

- Akzeptieren, wenn die STA gesteuert wird und eine erfolgreiche Steuerung meldet;
- Ablehnen, wenn die STA nicht gesteuert wird und eine abgelehnte Steuerung meldet;
- Falscher Basisdienstsatz beigetreten, wenn die STA einem Basisdienstsatz beitritt, der sich vom Ziel-Basisdienstsatz unterscheidet;
- Trennen, wenn sich die STA nach einer Legacy-Blacklist nicht erneut verbindet;
- Zurückspringen, wenn die STA zum Ziel-Basisdienstsatz gesteuert wird, aber bald zum Quell-Basisdienstsatz zurückkehrt;
- Zeitüberschreitung, wenn keine Antwort auf die Steuerung-Anfrage erhalten wird.

12. System zur verbesserten Steuerung und Verkehrslastverteilung in drahtlosen Mesh-Netzwerken, umfassend:

- Einen Root-AP
- Mindestens einen Extender-AP;

wobei

- Der Root-AP einen Controller umfasst, die Verarbeitungsmittel umfasst, die so konfiguriert sind, dass sie das Verfahren der Ansprüche 1 bis 11 ausführen und als Master fungieren;

der Extender-AP mindestens eine Agent-Entität umfasst, die so konfiguriert ist, dass sie als Slave fungiert und Informationen mit dem Controller austauscht.

**Revendications**

1. Procédé d'amélioration de la redirection des stations et de l'équilibrage de charge du trafic dans les réseaux maillés sans fil, comprenant :

    i. un point d'accès racine (Root AP) ordonne périodiquement à un point d'accès d'extension (Extenders AP) de transmettre un rapport relatif à l'état des messages des stations (STA), ledit état des messages comprenant des métriques associées aux stations connectées ou à l'état du médium sans fil dans lequel est situé le point d'accès racine ;
    ii. le point d'accès racine attend pendant une période de temps prédéfinie jusqu'à réception des états des messages demandés ;
    iii. le point d'accès racine conserve un historique des scores correspondant à tous les états des messages des stations reçus du point d'accès d'extension et met à jour ledit historique à mesure que les états des messages sont reçus ;
    iv. le point d'accès racine utilise l'historique des scores mis à jour des stations connectées au point d'accès d'extension comme entrée d'une routine d'optimisation de liaison et d'une routine d'équilibrage de charge afin de déterminer l'action à entreprendre, où ladite routine d'optimisation de liaison comprend :

        a. calculer le score courant d'une liaison, ledit score étant classifié par le débit maximal qu'une station donnée pourrait atteindre via un point d'accès et une bande donnés ;
        b. calculer des scores cibles pour chaque paire {STA, ensemble de services de base de liaison frontale (fronthaul Basic Service Set)} ;
        c. évaluer si le score le plus élevé d'une station vers un point d'accès cible est supérieur au score de ladite station vers le point d'accès courant et, dans l'affirmative, évaluer si le gain de débit est supérieur à tout gain précédemment enregistré pour ladite station dans le point d'accès courant ;
        d. vérifier si une redirection est requise et demander ladite redirection pour la paire {STA, ensemble de services de base cible (target Basic Service Set)}.

    v. exécuter les étapes i. à iv. en boucle continue jusqu'à réception d'une instruction contraire émanant du point d'accès racine,
    le procédé étant **caractérisé en ce que** le débit maximal est estimé en tenant compte de la puissance du signal, du débit physique maximal de la liaison de collecte (backhaul) et de l'estimation du débit physique théorique maximal en fonction des capacités de la station et du point d'accès, conformément à la formule

$$E_{phy}(s, b_t) = \begin{cases} \dfrac{M_{phy}(s, b_t)}{2^{H(b_t)}}, & \text{if } I_{FH}(b_t) = I_{BH}(b_t) \\ M_{phy}(s, b_t), & \text{if } I_{FH}(b_t) \neq I_{BH}(b_t) \end{cases}$$

    dans laquelle $E_{phy}$ représente l'estimation, $s$ représente la station, $b_t$ représente le BSS cible, $M_{phy}(s, b_t)$ représente le débit physique théorique maximal pouvant être obtenu sur la liaison entre la station $s$ et le BSS cible $b_t$, compte tenu de leurs capacités respectives ; $H(b_t)$ représente la distance, exprimée en nombre de sauts (hops), entre le point d'accès annonçant le BSS et le point d'accès racine ; $I_{FH}(b_t)$ désigne l'interface utilisée pour annoncer le BSS cible (fronthaul), $I_{BH}(b_t)$ représente l'interface utilisée pour les communications de collecte (backhaul).

2. Procédé selon la revendication 1, dans lequel la routine d'optimisation des liaisons est en outre programmée pour détecter des stations faibles sur la base des métriques de station contenues dans l'état du message ; ladite détection étant basée sur le RSSI de la liaison de la station.

3. Procédé selon la revendication 2, dans lequel les liaisons de stations faibles sont marquées et gérées par une entité de surveillance de la routine d'optimisation des liaisons, en :

    - demandant les métriques associées aux stations faibles à une fréquence plus élevée que celle des demandes effectuées par la routine algorithmique de base ;
    - mettant à jour l'historique des scores sur la base desdites demandes ;
    - effectuant une évaluation d'optimisation de liaison afin de déterminer si la station faible n'est plus considérée comme faible et, le cas échéant, supprimant le marquage correspondant.

4. Procédé selon l'une quelconque des revendications 2 ou 3 précédentes, dans lequel les stations faibles ne sont pas prises en compte par la routine d'équilibrage de charge.

5. Procédé selon l'une quelconque des revendications précédentes, dans lequel la routine d'équilibrage de charge qui est exécutée par un processus d'équilibrage de charge comprend :

  i. détecter une station saturée en déterminant si la station est incapable d'obtenir un débit plus élevé en raison d'une surcharge du médium de communication ;
  ii. prédire le débit des stations saturées et calculer un score prédictif pour chaque point d'accès cible potentiel ;
  dans lequel l'étape i. est exécutée pour les liaisons de toutes les stations connectées par:

    a. la détermination du nombre de fois qu'une station est classée comme saturée au cours d'une période donnée ;
    b. l'évaluation du niveau de saturation afin de déterminer si la station est ou non saturée ;
    c. le marquage des stations comme saturées ;

  et
  dans lequel l'évaluation du niveau de saturation prend en compte des données d'entrée comprenant des métriques de la station évaluée, notamment :

    - le temps d'occupation du médium (airtime), l'opportunité de transmission, le taux de retransmission, le débit physique, le débit de données, les échecs de transmission, le nombre de sauts jusqu'au point d'accès racine et la bande utilisée ;
    ainsi que des métriques provenant d'autres stations du réseau, notamment :

      - le temps d'occupation du médium et le débit de données ;

    afin de déterminer :

      - le temps d'occupation disponible du médium ;
      - le pourcentage du temps d'occupation maximal du médium ; et
      - le pourcentage du débit total de données ;

    et de classer lesdites stations comme saturées ou non saturées.

6. Procédé selon la revendication 5 précédente, dans lequel l'étape de prédiction du débit est calculée comme suit :

  i. surveillance des stations saturées pendant une période déterminée et stockage de l'ensemble des métriques pertinentes correspondant aux stations évaluées ;
  ii. calcul du score cible pour tous les points d'accès disponibles, suivi d'une évaluation en deux étapes consistant à :

    a. vérifier si le score le plus élevé d'une station saturée vers un point d'accès cible est supérieur au score de ladite station associé au point d'accès courant ;
    b. évaluer si le gain de débit est supérieur à tout gain précédemment enregistré pour ladite station vis-à-vis du point d'accès courant ;

    iii. demander la redirection pour la paire {STA, point d'accès cible} correspondant au gain de débit le plus élevé.

7. Procédé selon les revendications 1 et 6, dans lequel l'estimation du score le plus élevé d'une station saturée combine l'estimation du débit maximal, issue de la routine d'optimisation de liaison, avec des métriques caractérisant l'occupation du médium, notamment l'opportunité de transmission, le temps d'occupation disponible du médium (available airtime) et le taux de retransmission.

8. Procédé selon l'une quelconque des revendications précédentes, dans lequel la redirection des stations et la gestion de la hiérarchie entre les actions et les demandes de redirection des routines d'optimisation de liaison et d'équilibrage de charge, au niveau du point d'accès racine comprenant une entité de gestion de la redirection (Steer Manager), suivent les priorités suivantes :

i. optimisation des stations faibles ;
ii. équilibrage de charge ;
iii. optimisation des stations ordinaires ;

afin d'autoriser ou de refuser les actions des routines d'optimisation de liaison et d'équilibrage de charge sur une station donnée en fonction du comportement antérieur de ladite station.

9. Procédé selon la revendication 8 précédente, dans lequel une file d'attente de demandes de redirection est maintenue par attribution à chaque demande d'un état de redirection parmi les états suivants :

- En attente (Pending) : la demande se trouve dans la file d'attente pour être envoyée ;
- En cours de traitement (Processing) : la demande a été envoyée et une réponse est attendue ;
- Succès (Success) : la station a été redirigée ;
- Échec (Failed) : la station n'a pas répondu à la demande de redirection ou a rejeté celle-ci.

10. Procédé selon l'une quelconque des revendications 8 ou 9 précédentes, dans lequel la gestion des demandes de redirection, lesdites demandes étant générées par la routine d'optimisation de liaison ou par la routine d'équilibrage de charge, comprend les étapes suivantes :

i. vérifier si une pénalité temporelle est actuellement appliquée à la station et, dans l'affirmative, rejeter la demande ;
ii. en l'absence de pénalité temporelle appliquée à la station, vérifier qu'il n'existe aucune demande conflictuelle ;
iii. lorsqu'il existe une demande conflictuelle, ladite demande conflictuelle correspondant à une demande similaire concernant la même station, le même ensemble de services de base source (source Basic Service Set) et le même ensemble de services de base cible (target Basic Service Set), la nouvelle demande est rejetée lorsqu'une demande antérieure de priorité égale ou supérieure existe à l'état « En attente » ou « En cours de traitement » ; lorsque ladite demande antérieure est de priorité inférieure, la nouvelle demande est rejetée si ladite demande antérieure se trouve à l'état « En cours de traitement » ; lorsque ladite demande antérieure se trouve à l'état « En attente », ladite demande antérieure est supprimée et la nouvelle demande est acceptée.

11. Procédé selon l'une quelconque des revendications 8 à 10 précédentes, dans lequel, lorsqu'une station ne répond pas à une demande de redirection de la manière attendue, ladite station est marquée comme étant « non coopérative » pendant une période prédéfinie, en fonction du type de redirection suivant :

- redirection vers un ensemble de services de base ;
- redirection héritée (legacy steer), consistant à désauthentifier la station de l'ensemble de services de base courant et à inscrire son adresse MAC sur une liste noire dans chaque ensemble de services de base autre que l'ensemble de services de base source ou l'ensemble de services de base de destination ;

dans lequel la réponse à une demande de redirection est classée dans l'une des catégories suivantes :

- Acceptée (Accept), lorsque la station est redirigée et signale une redirection réussie ;
- Rejetée (Reject), lorsque la station n'est pas redirigée et signale un rejet de la redirection ;
- Association à un ensemble de services de base incorrect (Wrong Basic Service Set Joined), lorsque la station rejoint un ensemble de services de base différent de l'ensemble de services de base cible ;
- Déconnexion (Disconnect), lorsque la station ne se reconnecte pas après une mise sur liste noire héritée ;
- Retour à l'ensemble de services de base source (Jump Back), lorsque la station est redirigée vers l'ensemble de services de base cible mais revient rapidement à l'ensemble de services de base source ;
- Expiration du délai (Timeout), lorsqu'aucune réponse n'est obtenue à la demande de redirection.

12. Système d'amélioration de la redirection des stations et de l'équilibrage de charge du trafic dans les réseaux maillés sans fil, comprenant :

- un point d'accès racine ;
- au moins un point d'accès d'extension ;

dans lequel,

- le point d'accès racine comprend un contrôleur comportant des moyens de traitement configurés pour mettre en œuvre le procédé selon l'une quelconque des revendications 1 à 11 et pour fonctionner en tant qu'entité maître ;

le point d'accès d'extension comprend au moins une entité agente configurée pour fonctionner en tant qu'entité esclave et pour échanger des informations avec le contrôleur.

**Figure 1**

**Figure 2**

Figure 3

Figure 4

18

EP 4 035 447 B1

Figure 5

Figure 6

S700

S701 — Station
metrics received

S702 — weak? no

yes

S703 — flag sta

S704 — update score
history

S705 — Link optimization
assessment

S706 — Exit

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180352493 A1

- US 201608855521 A1